# FASCICULE DE BREVET EUROPEEN

(11) **EP 0 896 443 B1**
(45) Date de publication et mention de la délivrance du brevet: **21.07.2004**
(21) Numéro de dépôt: 98402009.9
(22) Date de dépôt: 06.08.1998
(51) Int. Cl.: H04B 7/26

(54) **Station de radiocommunication numérique**
Digitale Funkkommunikationsstation
Digital radio communication station

(30) Priorité: 08.08.1997 FR 9710214
(43) Date de publication de la demande: 10.02.1999
(73) Titulaire: NORTEL NETWORKS France, 78117 Châteaufort (FR)
(72) Inventeur: Marque-Pucheu, Gérard, 75011 Paris (FR)
(74) Mandataire: Loisel, Bertrand

(56) Documents cités:
- EP-A- 0 538 546
- EP-A- 0 564 429
- WO-A-95/01682
- GB-A- 2 287 381
- US-A- 5 446 739
- US-A- 5 490 168

## Description

La présente invention concerne les radiocommunications numériques. Elle s'applique en particulier aux systèmes de radiocommunications professionnelles avec des mobiles.

Dans ce domaine, on cherche généralement à satisfaire deux objectifs.

D'une part, un réseau de radiocommunication doit offrir une couverture radioélectrique aussi étendue que possible, tout en ayant un nombre de stations de base aussi réduit que possible.

D'autre part, le système de radiocommunication doit permettre d'assurer un nombre maximal de communications simultanées dans une bande de fréquence donnée. Cela implique une efficacité spectrale d'autant plus importante que l'environnement présente une forte densité de communications, comme c'est souvent le cas en zone urbaine.

Les deux objectifs mentionnés ci-dessus sont difficiles à concilier car ils correspondent à des conditions contradictoires pour la définition des paramètres du système de radiocommunications. En effet, réduire l'occupation spectrale des communications entraîne une baisse de la sensibilité des récepteurs radioélectriques. Cela conduit à une réduction de la portée des émetteurs, et à la nécessité d'augmenter le nombre des stations de base pour une couverture et une qualité données.

La présente invention a pour but de pallier ces inconvénients, en proposant un mode particulier d'organisation des canaux de transmission radioélectriques.

L'invention propose ainsi une station de radiocommunication numérique, comprenant une source de signal de parole codé ayant un débit donné, et des moyens de modulation pour mettre en forme un signal à partir du signal de parole codé issu de la source. Selon l'invention, la station comprend en outre un codeur à redondance ayant un rendement de codage de la forme K/N, K et N étant des entiers tels que O<K<N, et des moyens de commande pour sélectionner un mode de fonctionnement de la station parmi au moins un premier mode de fonctionnement où les moyens de modulation reçoivent directement le signal de parole codé issu de la source et le transforment en un signal radio occupant une fraction déterminée du temps sur une fréquence porteuse, et un second mode de fonctionnement où le codeur à redondance reçoit le signal de parole codé issu de la source et les moyens de modulation reçoivent le signal de sortie du codeur à redondance et le transforment en un signal radio occupant N/K fois ladite fraction déterminée du temps sur une fréquence porteuse.

Le second mode de fonctionnement procure une plus grande sensibilité des stations en communication, au prix d'une occupation plus importante des ressources spectrales disponibles. Ainsi, la même station (station de base ou terminal portatif), utilisant la même source de signal de parole codé et les mêmes moyens de modulation, peut avantageusement être utilisée dans le premier mode dans le cas d'une forte densité de trafic environnant (typiquement dans les zones urbaines), et dans le second mode dans les zones à moindre densité de trafic, où on cherche à maximiser la couverture radio.

L'invention s'applique de manière avantageuse aux systèmes de radiocommunication à accès multiple à répartition par fréquences (FDMA : « Frequency-Division Multiple Access ») ou par codes (CDMA). Dans ce cas, ladite fraction déterminée du temps sur une fréquence porteuse est égale à K/N. L'occupation temporelle de la porteuse est divisée en intervalles de temps réguliers. Une communication utilise 100 % de ces intervalles de temps dans le second mode, et seulement une proportion K/N dans le premier mode. Il est commode que ces intervalles de temps correspondent chacun à une trame du signal de parole codé.

L'invention est encore applicable aux systèmes de radiocommunication à accès multiple à répartition dans le temps (TDMA). L'allocation à une communication d'une fraction plus ou moins importante du temps sur une porteuse donnée peut alors être effectuée par réservation d'un nombre adéquat d'intervalles de temps élémentaires TDMA sur la porteuse.

D'autres particularités et avantages de la présente invention apparaîtront dans la description ci-après d'exemples de réalisation non limitatifs, en référence aux dessins annexés, dans lesquels :
- les figures 1 et 3 sont respectivement des schémas synoptiques des parties émission et réception d'une station de radiocommunication selon l'invention ;
- la figure 2 est un diagramme temporel illustrant la structure de canaux de radiocommunication utilisés par une station selon l'invention ; et
- la figure 4 est un schéma partiel d'une variante avantageuse de la partie réception de la station.

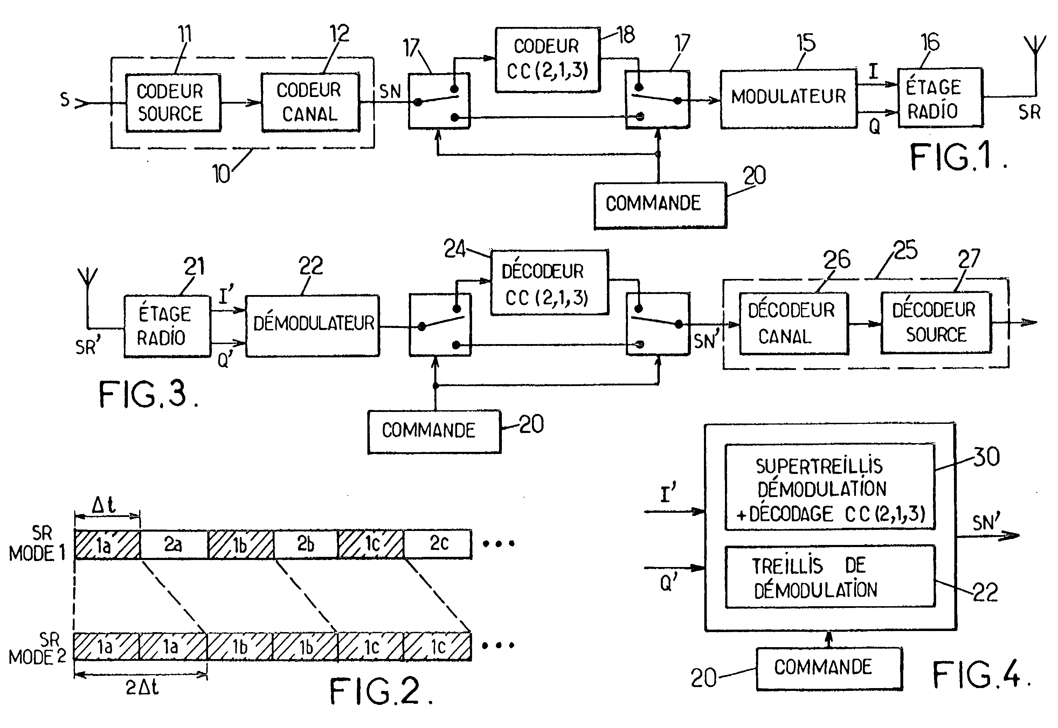

La partie émission de la station représentée sur la figure 1 comporte une source 10 de signal de parole codé SN. Dans l'exemple représenté, cette source traite un signal de parole S qui lui est adressé, au moyen d'un codeur source 11. Le signal de parole comprimé délivré par le codeur 11 est fourni à un codeur canal 12 qui, de façon connue, lui applique un codage correcteur d'erreurs et/ou un entrelacement. Le signal de parole codé SN est constitué par le signal du codeur canal 12. Il présente un débit numérique donné D fixé par les caractéristiques des codeurs 11 et 12.

La source 10 de signal de parole codé représentée sur la figure 1 peut être celle incluse dans un terminal portatif, le signal S étant alors issu du microphone du terminal. Elle peut également être incluse dans une station de base si le signal de parole S est disponible au niveau de cette station de base. Si en revanche la station de base dispose du signal codé SN mais non du signal d'origine S, la source du signal de parole codé est constituée par les parties réception et traitement de la station qui restituent le signal numérique SN à transmettre.

La partie émission de la station comporte un modulateur 15 qui reçoit un signal numérique obtenu à partir du signal de parole codé SN. De façon classique, le modulateur 15 délivre deux composantes en quadrature I, Q en bande de base, qu'un étage radio associé 16 mélange à deux ondes en quadrature à une fréquence porteuse, pour produire le signal radio SR émis par l'antenne de la station.

Comme symbolisé par deux commutateurs 17 sur la représentation schématique de la figure 1, la station de radiocommunication possède deux modes de fonctionnement.

Dans le premier mode, le signal de parole codé SN est directement adressé à l'entrée du modulateur 15. Dans le second mode, ce signal SN est fourni à l'entrée d'un codeur à redondance 18 dont la sortie fournit le signal appliqué au modulateur 15. Ce codeur à redondance 18 présente un rendement de codage de la forme K/N avec 0<K<N, c'est-à-dire que pour K symboles du signal de parole codé SN reçus, il délivre N symboles à l'entrée du modulateur 15.

Dans un mode de réalisation simple de l'invention, le codeur à redondance 18 peut être un codeur convolutif. Dans l'exemple représenté, c'est un codeur convolutif CC(2,1,3) de rendement ½ (K=1, N=2).

Le modulateur 15 applique le même schéma de modulation dans les deux modes de fonctionnement de la station.

On considère à titre d'exemple le cas d'un système FDMA dans lequel le modulateur 15 admet un débit numérique d'entrée de 16 kbit/s, avec des canaux radioélectriques de largeur de 12,5 kHz. Le débit numérique moyen D du signal SN issu de la source 10 est plus faible que cette valeur de 16 kbit/s, dans un rapport K/N. Il est de D=8 kbit/s dans l'exemple considéré. La source 10 délivre le signal SN sous forme de trames binaires successives, de durée Δt comprise entre 10 et 30 ms, par exemple Δt=20 ms. Pour laisser de la place aux bits de redondance lorsque le codeur 18 est utilisé, seulement une période de trame de durée Δt sur deux est occupée par une trame du signal SN constituée de symboles binaires à une cadence instantanée de 16 kbit/s.

Ainsi, dans le premier mode de fonctionnement de la station, le signal radio SR résultant de la transformation par le modulateur 15 du signal SN issu de la source 10 occupe seulement une fraction K/N du temps sur la fréquence porteuse. Ceci est illustré sur la première ligne de la figure 2 montrant une communication 1 dont les trames successives 1a,1b,1c... occupent un intervalle de temps Δt sur deux. Les autres intervalles de temps peuvent être utilisés pour créer un autre canal logique utilisable pour une autre communication radio (trame 2a,2b,2c... d'une autre communication 2).

Dans le second mode, le codeur à redondance 18 fournit au modulateur 15 un signal à 16 kbit/s à plein temps. Chaque trame 1a,1b,1c... occupe une durée (N/K).Δt=2. Δt, de sorte que le signal radio SR résultant de la sortie de la source 10 occupe la totalité du temps sur la fréquence porteuse, c'est-à-dire N/K fois la fraction correspondante dans le premier mode. Comme le montre la seconde ligne de la figure 2, le canal physique n'est pas capable d'accueillir une autre communication dans le second mode.

Le premier mode de fonctionnement augmente donc les capacités de trafic par rapport au second mode. Ce premier mode convient pour des zones à forte densité de trafic telles que des zones urbaines.

En revanche, le second mode, grâce à la redondance introduite par le codeur 18, améliore la sensibilité des récepteurs de 3 à 5 dB dans le cas où K/N=1/2. En d'autres termes, la portée de la communication peut être augmentée, de sorte que le second mode convient bien pour des zones où la densité géographique d'installation de stations de base est relativement faible.

On observe que cette bonne adaptation de la station à différents environnements est obtenue en utilisant la même source de signal de parole codé 10 et la même chaîne de modulation 15,16. Il suffit essentiellement de prévoir le codeur à redondance 18 dont la structure est très simple, ainsi que des moyens de commande appropriés pour le mettre en service sélectivement selon l'environnement.

Ces moyens de commande sont constitués par un module 20 sur le schéma de la figure 1. Le fonctionnement de ce module 20 est le suivant. Lors de l'échange de signalisation entre une station de base et un terminal portatif, précédant l'établissement d'une communication sur un canal de trafic, la station de base notifie au terminal portatif quel mode de fonctionnement doit être utilisé. Ce mode dépendra essentiellement du site où se trouve la station de base. Néanmoins, on peut observer que la même station de base supportant plusieurs communications avec des terminaux portatifs à un instant donné, peut parfaitement fonctionner selon des modes différents pour ces communications. Ainsi, la fixation du mode de fonctionnement pourrait dépendre de paramètres tels qu'une priorité affectée à une communication par rapport à d'autres (par exemple, on pourrait prévoir qu'une communication prioritaire s'effectue dans le second mode, de meilleure sensibilité, même dans des zones à forte densité de trafic). On peut également concevoir des protocoles dans lesquels le mode de fonctionnement utilisé pour une communication donnée dépendrait de la qualité du lien radio observée en cours de communication.

Une fois que les deux stations connaissent le mode de fonctionnement à adopter, leurs modules 20 commandent la mise en service ou la désactivation de leurs codeurs à redondance 18 et de leurs décodeurs associés, pour la transmission des signaux de phonie sur le canal de trafic.

Si le système de radiocommunication supporte des communications en mode talkie-walkie, c'est-à-dire directement de terminal portatif à terminal portatif, il est préférable d'effectuer ces communications dans le second mode, pour simplifier les problèmes de synchronisation.

Les canaux de communs de signalisation, utilisés notamment par la station de base pour notifier aux terminaux portatifs le mode de fonctionnement à utiliser, sont fondés sur le second mode de fonctionnement, c'est-à-dire que les signaux de signalisation sont fournis à l'entrée du codeur à redondance 18 avant d'être appliqués au modulateur 15. Ainsi, les terminaux portatifs qui se trouvent proches de la limite de sensibilité du second mode peuvent décoder correctement les informations de signalisation transmises. Une protection complémentaire de ces informations de signalisation est prévue compte tenu de leur importance. Ainsi, les informations de signalisation sont appliquées à un autre codeur correcteur d'erreurs avant d'être transmises au codeur à redondance 18, afin que la station réceptrice puisse détecter et/ou corriger des erreurs de transmission des informations de signalisation. Cet autre codeur à redondance applique de préférence un code en blocs, tel par exemple un code BCH ou Reed-Solomon.

La partie réception de la station, dont la figure 1 montre la partie émission, est représentée schématiquement sur la figure 3. Cette partie réception est prévue pour traiter le signal radio SR' reçu depuis un émetteur selon la figure 1. De façon classique, un étage radio 21 convertit ce signal SR' en deux composantes en quadrature en bande de base I',Q' qui sont adressées au démodulateur 22. Un module de commande 20 met en service sélectivement un décodeur 24 selon le mode de fonctionnement utilisé. L'estimation SN' du signal de parole codé SN est restituée en sortie du démodulateur 22 dans le premier mode de fonctionnement, et en sortie du décodeur 24 dans le second mode de fonctionnement.

Le démodulateur 22 effectue les opérations duales de celles du modulateur 15. Le décodeur 24 exploite la redondance introduite par le codeur 18 pour détecter et/ou corriger d'éventuelles erreurs de transmission. Il est par exemple constitué par un treillis de décodage opérant selon l'algorithme de Viterbi. L'estimation SN' du signal de parole codé est fournie à une chaîne de traitement 25, comportant par exemple un décodeur canal 26 et un décodeur source 27 correspondant respectivement aux codeurs 12 et 11 de l'émetteur.

Dans le mode de réalisation de la figure 3, le codeur 24 apporte un gain de réception de l'ordre de 3 dB dans le second mode de fonctionnement par rapport au premier mode, dans le cas où K/N=1/2.

Ce gain peut être encore amélioré en utilisant deux démodulateurs 22,30, sélectionnés par le module de commande 20 selon le mode de fonctionnement, comme représenté sur la figure 4. Le démodulateur 22, utilisé dans le premier mode de fonctionnement est semblable à celui utilisé dans la forme de réalisation selon la figure 3. C'est par exemple un treillis de démodulation mettant en oeuvre l'algorithme de Viterbi sur la base des états du modulateur numérique 15 de la figure 1. L'autre démodulateur 30 délivre directement l'estimation SN' du signal de parole codé à partir des composantes I',Q' dans le second mode de fonctionnement. Ce démodulateur 30 combine les états du codeur à redondance 18 et du modulateur numérique 15 de l'émetteur conformément au principe des modulations codées (voir G. Ungerboeck « Channel Coding with Multilevel/Phase Signals », IEEE Transactions on Information Theory, Vol. IT-28, n° 1, janvier 1982). Ce démodulateur 30 peut notamment être un supertreillis de démodulation et de décodage, fonctionnant selon l'algorithme de Viterbi avec des états combinés de modulation et de codage CC(2,1,3). Le démodulateur 30 permet d'obtenir des gains de réception allant jusqu'à 5 dB environ dans le second mode par rapport au premier mode, dans le cas où K/N=1/2.

## Revendications

1. Station de radiocommunication numérique, comprenant une source (10) de signal de parole codé ayant un débit donné (D), et des moyens de modulation (15,16) pour mettre en forme un signal radio (SR) à partir du signal de parole codé (SN) issu de la source, **caractérisé en ce qu'**elle comprend en outre un codeur à redondance (18) ayant un rendement de codage de la forme K/N, K et N étant des entiers tels que O<K<N, et des moyens de commande (20) pour sélectionner un mode de fonctionnement de la station parmi au moins un premier mode de fonctionnement où les moyens de modulation reçoivent directement le signal de parole codé issu de la source et le transforment en un signal radio occupant une fraction déterminée du temps sur une fréquence porteuse, et un second mode de fonctionnement où le codeur à redondance reçoit le signal de parole codé issu de la source et les moyens de modulation reçoivent le signal de sortie du codeur à redondance et le transforment en un signal radio occupant N/K fois ladite fraction déterminée du temps sur une fréquence porteuse.

2. Station de radiocommunication selon la revendication 1, comprenant en outre un codeur correcteur d'erreur auquel sont appliquées des informations de signalisation, et dans laquelle ces informations de signalisation sont transmises dans le second mode de fonctionnement, la sortie dudit codeur correcteur d'erreur étant fournie à l'entrée du codeur à redondance de rendement K/N (18).

3. Station de radiocommunication selon la revendication 2, dans laquelle ledit codeur correcteur d'erreur applique un code en blocs.

4. Station de radiocommunication selon l'une quelconque des revendications précédentes, dans laquelle K=1 et N=2.

5. Station de radiocommunication selon l'une quelconque des revendications précédentes, dans laquelle le codeur à redondance de rendement K/N est un codeur convolutif (18).

6. Station de radiocommunication selon l'une quelconque des revendications précédentes, dans laquelle ladite fraction prédéterminée est égale à K/N, et l'occupation temporelle d'une fréquence porteuse est répartie en intervalles de temps réguliers (Δt), entièrement alloués à la source de signal de parole codé (10) dans le second mode de fonctionnement, et alloués régulièrement dans la proportion K/N dans le premier mode de fonctionnement.

7. Station de radiocommunication selon la revendication 6, dans laquelle lesdits intervalles de temps (Δt) correspondent à une trame du signal de parole codé.

8. Station de radiocommunication selon la revendication 6 ou 7, dans laquelle lesdits intervalles de temps (Δt) sont de 10 à 30 ms.

9. Station de radiocommunication selon l'une quelconque des revendications précédentes, comprenant en outre des moyens de réception (21-25) pour traiter un signal radio (SR') transmis depuis une autre station ayant également les deux modes de fonctionnement, les moyens de réception comportant un premier démodulateur (22) effectuant, dans le premier mode de fonctionnement, des opérations duales de celles des moyens de modulation (15) de l'autre station, et un second démodulateur (30) utilisé dans le second mode de fonctionnement et combinant les états du codeur à redondance (18) et des moyens de modulation (15) de l'autre station.

## Claims

1. A digital radio communication station, comprising a coded speech signal source (10) having a given digital rate (D), and modulating means (15, 16) for producing a radio signal (SR) from the coded speech signal (SN) provided by the source, **characterised in that** it further includes a redundancy encoder (18) with a coding rate of the form K/N, where K and N are integers such that 0<K<N, and control means (20) for selecting an operating mode of the station from at least a first operating mode where the modulating means directly receive the coded speech signal provided by the source and convert it into a radio signal occupying a determined fraction of time on a carrier frequency, and a second operating mode where the redundancy encoder receives the coded speech signal provided by the source and the modulating means receive the output signal from the redundancy encoder and convert it into a radio signal occupying N/K times said determined fraction of time on a carrier frequency.

2. A radio communication station in accordance with claim 1, further comprising an error-correcting encoder to which signaling data is applied, and wherein said signaling data is transmitted in the second operating mode, the output from said error-correcting encoder being fed to the input of the K/N-rate redundancy encoder (18).

3. A radio communication station in accordance with claim 2, wherein said error-correcting encoder applies a block code.

4. A radio communication station in accordance with any one of the preceding claims, wherein K=1 and N=2.

5. A radio communication station in accordance with any one of the preceding claims, wherein the K/N-rate redundancy encoder is a convolutional encoder (18).

6. A radio communication station in accordance with any one of the preceding claims, wherein said determined fraction is equal to K/N, and the occupancy of a carrier frequency is distributed in uniform time intervals (Δt), fully allocated to the coded speech signal source (10) in the second operating mode, and uniformly allocated in the proportion K/N in the first operating mode.

7. A radio communication station in accordance with claim 6, wherein said time intervals (Δt) correspond to a frame of the coded speech signal.

8. A radio communication station in accordance with claim 6 or 7, wherein said time intervals (Δt) are of 10 to 30 ms.

9. A radio communication station in accordance with any one of the preceding claims, further comprising reception means (21-25) for processing a radio signal (SR') transmitted from another station which also has the two operating modes, the reception means comprising a first demodulator (22) which, in the first operating mode, carries out operations dual to those of the modulator (15) of the other station, and a second demodulator (30) used in the second operating mode and combining the states of the redundancy encoder (18) and of the modulating means (15) of the other station.

## Patentansprüche

1. Digitale Funkkommunikationsstation mit einer Quelle (10) für ein kodiertes Wortsignal mit einem gegebenen Durchsatz (D) und Modulationsmitteln (15, 16) zur Formung eines Funksignals (SR) aus dem von der Quelle kommenden kodierten Wortsignal (SN), **dadurch gekennzeichnet, daß** sie außerdem einen Redundanzkodierer (18) mit einer Kodierleistung der Form K/N aufweist, wobei K und N solche ganze Zahlen sind, daß 0<K<N, sowie Steuermittel (20) zum Wählen eines Betriebsmodus der Station aus mindestens einem ersten Betriebsmodus, in dem die Modulationsmittel direkt das von der Quelle kommende kodierte Wortsignal empfangen und es in ein Funksignal überführen, das einen bestimmten Teil der Zeit auf einer Trägerfrequenz besetzt, und einem zweiten Betriebsmodus, in dem der Redundanzkodierer das von der Quelle kommende kodierte Wortsignal empfängt und die Modulationsmittel das Ausgangssignal des Redundanzkodierers empfangen und es in ein Funksignal überführen, das das N/K-fache dieses bestimmten Teils der Zeit auf einer Trägerfrequenz besetzt.

2. Funkkommunikationsstation nach Anspruch 1, die ferner einen Fehlerkorrekturkodierer aufweist, an den Zeichengabeinformationen angelegt werden, und bei der diese Zeichengabeinformationen im zweiten Betriebsmodus übertragen werden, wobei der Ausgang des Fehlerkorrekturkodierers zum Eingang des Redundanzkodierers (18) mit der Leistung K/N übertragen wird.

3. Funkkommunikationsstation nach Anspruch 2, bei der der Fehlerkorrekturkodierer einen Kode in Blöcken anlegt.

4. Funkkommunikationsstation nach einem der vorhergehenden Ansprüche, bei der K=1 und N=2.

5. Funkkommunikarionsstation nach einem der vorhergehenden Ansprüche, bei der der Redundanzkodierer mit der Leistung K/N ein konvolutiver Kodierer (18) ist.

6. Funkkommunikationsstation nach einem der vorhergehenden Ansprüche, bei der der vorbestimmte Teil gleich K/N ist und die zeitliche Besetzung einer Trägerfrequenz in regelmäßigen Zeitintervallen (Δt) verteilt ist, die der Quelle (10) für das kodierte Wortsignal in dem zweiten Betriebsmodus ganz zugewiesen sind und in dem ersten Betriebsmodus regelmäßig im Verhältnis K/N zugewiesen sind.

7. Funkkommunikationsstation nach Anspruch 6, bei der die Zeitintervalle (Δt) einer Einheit des kodierten Wortsignals entsprechen.

8. Funkkommunikationsstation nach Anspruch 6 oder 7, bei der die Zeitintervalle (Δt) 10 bis 30 ms betragen.

9. Funkkommunikationsstation nach einem der vorhergehenden Ansprüche, die außerdem Empfangsmittel (21-25) aufweist, um ein Funksignal (SR') zu verarbeiten, das von einer anderen Station übertragen wird, die ebenfalls zwei Betriebsmoden besitzt, wobei die Empfangsmittel einen ersten Demodulator (22) aufweisen, der im ersten Betriebsmodus Operationen ausführt, die zu denen der Modulationsmittel (15) der anderen Station dual sind, sowie einen zweiten Demodulator (30), der im zweiten Betriebsmodus verwendet wird und der die Zustände des Redundanzkodierers (18) und der Modulationsmittel (15) der anderen Station kombiniert.
